# EUROPEAN PATENT APPLICATION

(11) **EP 4 414 295 A1**
(43) Date of publication of application: **14.08.2024**
(21) Application number: 23156306.5
(22) Date of filing: 13.02.2023
(51) Int. Cl.: B65G 1/04, B66F 9/06

(54) **SHUTTLE FOR THREE-DIMENSIONALLY TRANSPORTING GOODS IN AN AUTOMATED WAREHOUSE**

(71) Applicant: MOVU, 9160 Lokeren (BE)
(72) Inventor: Vandemergel, Luc, 8020 Oostkamp (BE)
(74) Representative: IP HILLS NV

(57) **Abstract**

A shuttle for three-dimensionally transporting goods in an automated warehouse is provided. The shuttle is adapted for moving at least non-horizontally in an automated warehouse along a non-horizontal track. The shuttle comprises a frame for carrying the payload. The shuttle has two lateral sides, at each lateral side of the shuttle comprises at least one pair of wheels, said pairs of wheels being adapted for moving said shuttle at least non-horizontally in an automated warehouse along a non-horizontally track. The two wheels of each pair of wheels are mutually connected by means of a rigid connection means, the rigid connection means being rotationally connected along a pivot axis to the frame. The shuttle comprises at least one actuator to control and set the rotational position of the frame and connecting means. For each pair of wheels, at least one of said wheels is a pinion-, sprocket- or gear wheel having its axis of rotation non-parallel to the lateral side of the shuttle. The at least one of said wheels being a pinion-, sprocket- or gear wheel is or are provided with a teeth mesh system enabling said at least one of said wheels being a pinion-, sprocket- or gear wheel to rotate in only one direction when a force in axial direction is applied to the teeth of said wheel.

## Description

### Field of the Invention

The present invention generally relates to shuttles for moving in an automated warehouse, more particularly to shuttles for three-dimensionally transporting goods in an automated warehouse, like shuttles adapted for moving at least non-horizontally in an automated warehouse along a non-horizontal track.

### Background of the Invention

Automated warehouses and automated warehouse shuttle systems are generally known. Warehouses include relatively large storage structures, generally structured along a plurality of substantially parallel racking aisles. The storage structures are arranged to provide storage locations to goods, often bins or cartons . Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along the aisle of the warehouse and more preferably, a pair of rails per level and per aisle of the warehouse. Transverse lanes may connect said substantially parallel aisles, which transverse lanes may or may not be provided with tracks. Optionally, inclined or vertical tracks may connect tracks between different levels of the storage structure. Additionally, and/or alternatively, lift systems may allow connections between various levels of the storage structure. The system further includes warehouse shuttles, in particular mobile robots, which are configured to move along said tracks, and which are configured to transport goods and/or goods carriers to and from said storage locations in the storage structure. An automated shuttles system can comprise a plurality of automated shuttles which are often integrated into, and controlled by, a central warehouse management control system.

Shuttles moving in such warehouses are hence to move in a horizontal direction, and in a non-horizontal, such as a vertical direction. Shuttles may have a dedicated vertical moving system to move along this non-horizontal, such as a vertical direction. Such movement is also referred to a climbing. The vertical moving system may comprise wheels, like climbing wheels which are to contact the non-horizontal, such as vertical tracks. These wheels are coupled to the frame of the shuttle, just as the wheels enabling the shuttle to move in horizontal directions. Such shuttles are e.g. described in US11365049.

During non-horizontal displacement, the frame of the shuttles may not be horizontally or have the tendency to vibrate . This vibration may cause the wheels of the vertical moving system to disconnect from the non-horizontal, e.g. vertical tracks, which may lead to failure of the shuttle. The more the vibration may cause noise and early wear of the shuttle mechanics.

As shuttles need to switch between moving in horizontal and non-horizontal direction, the wheels to contact the non-horizontal tracks have to engage and disengage with the non-horizontal tracks. The engagement of the wheels, such as climbing wheels, into the non-horizontal track and track system, sets high standards to the racking and the non-horizontal track system. If these standards are not met, the engagement of the climbing wheel may fail and may require several engagement attempts, causing a higher operating time.

While the wheels used to move horizontally in the rack e.g. the driving wheels, are on the horizontal tracks or rails, the payload and weight of the shuttle will not force the wheels, such as climbing wheels, e.g. climbing gear, into the non-horizontal tracks, e.g. toothed bars. As such, this space between the climbing wheels, e.g. climbing gear and the non-horizontal track, e.g. toothed bar may be present, at start of the non-horizontal moving action, i.e. while the driving wheels leaving the rails. This non optimal engagement at start of the non-horizontal movement may cause early wear.

### Summary of the Invention

It is an object of the present invention to provide shuttles moving in automated warehouses which solve some or all the problems of prior art and may have further advantages over the shuttles presently known.

According to a first independent aspect of the invention, a shuttle for three-dimensionally transporting goods in an automated warehouse, said shuttle being adapted for moving at least non-horizontally in an automated warehouse along a non-horizontal track. The shuttle comprises a frame for carrying the payload. The shuttle has two lateral sides, at each lateral side of the shuttle comprises at least one pair of wheels, said pairs of wheels being adapted for moving said shuttle at least non-horizontally in an automated warehouse along a non-horizontally track. The two wheels of each pair of wheels are mutually connected by means of a rigid connection means, the rigid connection means being rotationally connected along a pivot axis to the frame. The shuttle comprises at least one actuator to control and set the rotational position of the frame and connecting means. For each pair of wheels, at least one of said wheels is a pinion-, sprocket- or gear wheel having its axis of rotation non-parallel to the lateral side of the shuttle. The at least one of said wheels being a pinion-, sprocket- or gear wheel is or are provided with a teeth mesh system enabling said at least one of said wheels being a pinion-, sprocket- or gear wheel to rotate in only one direction when a force in axial direction is applied to the teeth of said wheel.

According to some embodiments, the teeth mesh system may comprise for the at least one of said wheels being a pinion-, sprocket- or gear wheel having at the radial face side of the wheel, which is oriented outwards from the shuttle,
- at least part of the edge between the radial face side of each tooth and at least one flank of the teeth is chamfered according to a plane having its normal non-parallel to the plane defined by the axis of rotation of the wheel and the middle point of the top land of the tooth, and
- a one-way clutch bearing is provided between the pinion-, sprocket- or gear wheel and the axis of rotation.

Hence, a shuttle for three-dimensionally transporting goods in an automated warehouse being adapted for moving at least non-horizontally in an automated warehouse along a non-horizontal track. The shuttle may comprise a frame for carrying the payload. The shuttle may have two lateral sides, at each lateral side the shuttle comprises at least one pair of wheels, said pairs of wheels being adapted for moving said shuttle at least non-horizontally in an automated warehouse along a non-horizontally track. The two wheels of each pair of wheels may be mutually connected by means of a rigid connection means, the rigid connection means being rotationally connected along a pivot axis to the frame. The shuttle may comprise at least one actuator to control and set the rotational position of the frame and connecting means. For each pair of wheels, at least one of said wheels may be a pinion-, sprocket- or gear wheel having its axis of rotation non-parallel to the lateral side of the shuttle and at the radial face side of the wheel which is oriented outwards from the shuttle, at least part of the edge between the radial face side of each tooth and at least one flank of the teeth may be chamfered according to a plane having its normal non-parallel to the plane defined by the axis of rotation of the wheel and the middle point of the top land of the tooth. For each of the pinion-, sprocket- or gear wheels, a one-way clutch bearing may be provided between the pinion-, sprocket- or gear wheel and the axis of rotation.

The provision of these features to a shuttle for three-dimensionally transporting goods in an automated warehouse according to the first aspect of the invention, will enable the at least one wheels of the shuttle to connect and mate smoothly with the non-horizontal track the wheel is to move along, while the frame can be stabilized and kept in a defined position in view of the horizontal. The shuttle is prevented to fall out of the non-horizontal track, e.g. vertical track, when the non-horizontal, e.g. vertical moving of the shuttle by means of the at least one wheels along the nonhorizontal tracks, is blocked. As such a safe moving of the shuttle along the non-horizontal track is guaranteed to a larger extent.

An automated warehouse may comprise at least one shuttle according to the first aspect of the invention. The automated warehouse may comprise a racking with at least one non-horizontally oriented, optionally toothed, surface being part of a non-horizontal track.

According to a second, independent aspect, a shuttle for three-dimensionally transporting goods in an automated warehouse, which shuttle is adapted for moving at least non-horizontally in an automated warehouse along a non-horizontal track. The shuttle comprises a frame for carrying the payload. The shuttle has two lateral sides, at each lateral side the shuttle comprises at least one pair of wheels, said pairs of wheels being adapted for moving said shuttle at least non-horizontally in an automated warehouse along a non-horizontally track. The two wheels of each pair of wheels are mutually connected by means of a rigid connection means, the rigid connection means being rotationally connected along a pivot axis to the frame. The shuttle comprises at least one actuator to control and set the rotational position of the frame and said connecting means.

The actuator provides sufficient space between the gear and the toothed bar, to ease the extraction and retraction of the climbing wheels and avoiding early wear during this operation. The engagement of the climbing wheels into the climbing track is realized by pivoting the rigid connection with the pair of wheels towards the climbing track.

The provision of the actuator control and set the rotational position of the frame and connecting means, causes the frame to be stabilized and kept in a defined position in view of the horizontal. The actuator may be controlled, such that the rotational position is set at a predefined angle versus the vertical, when the shuttle is moving in a non-horizontal direction in the warehouse. This angle may be dependent on the load the shuttle is carrying at that moment and dependent on the manufacturing tolerances of the climbing track.

Alternatively, the force provided by the actuator may be tuned to the load the shuttle is carrying at that moment. As an example, when the shuttle starts its non-horizontal movement along a non-horizontal track, the load on the frame may force the frame to bend downwards, in case the shuttle is traveling non-horizontally on only two wheels, one at each lateral side of the shuttle and both positioned towards the leading or tailing side of the shuttle. This downwards bending may be compensated by the actuator, bringing the frame, or at least the load carrying platform of the frame back in substantially horizontal position.

When the shuttle, optionally being loaded with a payload, is moving in non-horizontal direction on the track in a warehouse, the interlocking of the teeth may cause vibration of the frame, hence the carrying part of the frame optionally carrying the payload. These vibrations may be damped by adding an energy absorbing element between the pivoting rigid connection and the linear actuator.

According to some embodiments of shuttles of the second aspect of the invention, for each pair of wheels, at least one of said wheels being a pinion-, sprocket- or gear wheel having its axis of rotation non-parallel to the lateral side of the shuttle, said pinion-, sprocket- or gear wheels may have at the radial face side of the wheel which is oriented outwards from the shuttle, at least part of the edge between the radial face side of each tooth and at least one flank of the teeth is chamfered according to a plane having its normal non-parallel to the plane defined by the axis of rotation of the wheel and the middle point of the top land of the tooth.

According to some embodiments of shuttles of the second aspect of the invention, for each pair of wheels, at least one of said wheels being a pinion-, sprocket- or gear wheel having its axis of rotation non-parallel to the lateral side of the shuttle, for each of the pinion-, sprocket- or gear wheels a one-way clutch bearing may be provided between the pinion-, sprocket- or gear wheel and the axis of rotation.

According to some embodiments of shuttles of the second aspect of the invention, the two wheels of each pair of wheels may be positioned on the rigid connection at mutually different heights, said pivot axis being coaxial with one of the two wheels.

The two wheels of each of the pair of wheels may be a climbing wheel and a pressure wheel. The wheel being a pinion-, sprocket- or gear wheel may be the climbing wheel. The other of the two wheels may have a circular circumference and may be the pressure wheel. The climbing wheel may interlock with teeth of a nonhorizontal toothed surface, like a toothed bar, having its serrated surface perpendicular or substantially perpendicular to the lateral side of the shuttle. The pressure wheel may press against a second surface parallel to the serrated surface, i.e. perpendicularly to the lateral side of the shuttle.

The shuttle is adapted for moving at least non-horizontally, e.g. substantially vertically, in an automated warehouse along a non-horizontal, e.g. a substantially vertical track The lateral sides of the shuttle are the sides being parallel to the forward and backward moving direction of the shuttle.

The wheels of each pair of wheels have an axis of rotation which may be mutually substantially parallel. The wheels of the pairs of wheels have axes of rotation which may be mutually substantially parallel.

According to some embodiments of shuttles of the second aspect of the invention, for one or for both pairs of wheels, the wheels of the pair of wheels may have axes of rotation parallel to the pivot axis.

The axes of rotation of the wheels of the pair of wheels at the first lateral side of the shuttle may be parallel to the axes of rotation of the wheels of the pair of wheels at the second lateral side of the shuttle.

More, for each of the wheels of the pair of wheels on a first lateral side, there is one wheel of the pair of wheels on the second lateral side having its axis of rotation being collinear with said wheel on the first lateral side.

According to some embodiments of shuttles of the second aspect of the invention, each of the pairs of wheels may comprise a climbing wheel and a pressure wheel.

Such climbing wheels may contact a non-horizontally oriented toothed bar or surface along the vertical track of the warehouse. This non-horizontally oriented toothed bar or surface may be provided at the inner side of a profiled track, like a U or C shaped profile, where the toothed bar or surface may be positioned at one of the flanges. A pressure wheel may be adapted to exercise force to the opposite flange at the inner side of the profile. The toothed surface may be a gear rack.

According to some embodiments of shuttles of the second aspect of the invention, for one or both the pairs of wheels, the rigid connection means may be extendible and retractable in a direction parallel to the pivot axis. The wheel or wheels being connected to the rigid connection means, hence may itself be moved from an extended to a retracted position and vice versa, by extending or retracting the rigid connection means.

The driving means to drive at least one of the at least two wheels, may be adapted to continue driving said wheel when being in extended position. The driving means, such as a drive axle, may be extendible.

According to some embodiments of shuttles of the first and/or second aspect of the invention, each pair of wheels, at each lateral side of the shuttle, may be mutually connected by means of a rigid connection means. Hence two rigid connection means are provided, one for each pair of wheels. Each of the two rigid connection means is rotationally connected along its pivot axis to the frame. The shuttle comprises at least two actuators, one actuator is to control and set the rotational position of the frame and one of the first of the two connecting means, the second actuator is to control and set the rotational position of the frame and one of the second of the two connecting means This setup has the advantage that the tolerances on the non-horizontal tracks, which may influence the contact between e.g. climbing wheel and the track, may be compensated at each lateral side of the shuttle one independent one from the other.

According to some embodiments of shuttles of the second aspect of the invention, for one or both the pairs of wheels, the rigid connection means may be a plate.

According to some embodiments of shuttles of the second aspect of the invention, one rigid connection means may be provided to connect the pairs of wheels on both lateral sides of the shuttle. Possibly this one rigid connection means may be a massive plate, or may be a plate structure, comprising at least three mutually parallel planes, for which the planes may slide one over the other in a direction parallel to the planes of the plates. As an example, one plane, the middle plane, is connected to the actuator, while at one side of the plane the two other planes may be slidingly engaged with the middle plane. The two slidingly engaging plane may each provide a pair of wheels at one of the lateral sides of the shuttle. The sliding engagement may allow the pair of wheels carried by this plate, e.g. at the side of the slidingly engaging plane oriented away from the other slidingly engaging plane, to move in the direction of the sliding engagement. This sliding engagement may be parallel to the axes of rotation of the pair of wheels. As such the pair of wheels may move linearly in line with their axes of rotation. Hence this rigid connection may extend and retract via telescopic slides or similar means mounted on the pivoting plate of the shuttle frame. The telescopic slides and the pivoting plate together provide the rigid connection means.

According to some embodiments of shuttles of the second aspect of the invention, one actuator may be provided to the one, or to both the connecting means of the pairs of wheels on both lateral sides of the shuttle.

In such shuttles, the shuttle comprises an actuator to control and set the rotational position of the frame and connecting means.

According to some embodiments of shuttles of the second aspect of the invention, the at least one actuator may be a linear actuator.

In case of a plurality of actuators, each of the actuators may be a linear actuator, optionally all being identical.

According to some embodiments of shuttles of the second aspect of the invention, the at least one actuator may be controlled by torque and/or position, preferably by torque and position.

In case of a plurality of actuators, each of the actuators may be controlled by torque and/or position, preferably by torque and position.

The actuator may be a hydraulic , pneumatic or mechanical linear actuator. The mechanical actuator, being preferably a ball screw spindle, may be driven by a brushless DC-motor. The torque and linear displacement are controlled by the motor control system. The motor brake holds the rotational position of the pivoting plate in respect of the frame while moving on the non-horizontal track, which is set at predefined value, and which may optionally be adjustable in function of the payload to be carried and lifted by the shuttle.

The shuttle may comprise a levelling sensor sensing the horizontal position of the frame or the deviation of the load carrying surface of the frame from the horizontal, more particularly angle from the load carrying surface of the shuttle in view of the horizontal. If the position is not satisfactory or as required, the actuator may adjust the rotational position, in particularly during moving on the non-horizontal track of the shuttle, in order to keep the load carrying surface horizontal or at a predefined angle.

One or both the rigid connection means may be rotationally connected to the frame by means of hinges, which hinges define the pivot axis or axes. The axes of rotation of the wheel and the pivot axis are preferably parallel, and most preferably substantially perpendicular to the lateral side of the shuttle. The distance between the pivot axis and the axis of rotation of the wheel used to climb in non-horizontal direction, e.g. the gearwheel, sprocket or pinion, is preferably kept minimal, or even more preferably the pivot axis and the axis of rotation of the wheel used to climb in non-horizontal direction coincide.

When the shuttle is carried by the wheels driving on the horizontal trails, the full engagement of the wheels for moving non-horizontally in the track, such as by gear wheels and a gear rack, may not be realized by the weight of the shuttle or the payload. The linear actuator may provide the engagement by pivoting the wheels for moving non-horizontally, such as gear wheels into the gear rack until a set torque is reached. This may also compensate deviations of the distance between the track contacting the wheel, like a gear wheel, and the opposite pressure track. Too much space between the wheel, like a gear wheel and a gear rack, may lead to noise and wear of e.g. the teeth on the climbing gear and the gear rack.

According to some embodiments, the shuttle is a shuttle for three-dimensionally transporting goods in an automated warehouse according to the invention, said shuttle being adapted for moving at least vertically in an automated warehouse along a vertical track comprising a toothed surface and an opposite contact surface, said shuttle having at each of its two lateral sides
- a climbing wheel adapted to climb along the toothed surface, the climbing wheels are mutually opposite and are each mounted on an axis of rotation, the axes of rotation being mutually parallel;
- a pressure wheel for exercising a pressure against a contact surface during movement of the shuttle along the toothed surface, the pressure wheels being mutually opposite,
at each of the two lateral sides of the shuttle, said climbing wheel and said pressure wheel are connected by means of a rigid structure being pivotable around a pivot axis being substantially parallel to the axis of rotation, the position of the rigid structure relative to the pivot axis is controllable by at least one actuator.

The shuttles according to the invention have several advantages. When at both lateral sides of the shuttle the at least two wheels are used for climbing, e.g. in case of a toothed climbing wheel and a pressure wheel, both positioned within the cavity of a profiled non-horizontal track, the actuator may clamp the two wheels in the cavity of the profile. As such the non-horizontal displacement may be exercised by driving the climbing wheel. When the shuttle would not be in a horizontal plane the actuator may adjust the position of the frame in view of the position of the connection means connecting the at least two wheels. The damping property of the linear actuator may reduce the vibration or oscillation. Also in case of a load being carried by the shuttle in the non-horizontal direction, the horizontal position of the load may be adjusted, if e.g. the shuttle would bend down to the opposite side of the nose of the shuttle where the at least two wheels at each lateral side may be present.

The shuttle may further comprise other wheels to move the shuttle horizontally e.g. on a horizontal on track. Four wheels, one at each corner of shuttle may be provided, or 8 wheels, all paired and one at each corner of shuttle. The axes of rotation of these other wheels may be parallel but non-colinear with rotation axis of at least two wheels, e.g. the climbing wheel and the pressure wheel. The shuttle may further comprise a swivel wheel which is used, together with two of the further wheels, one at each corner of shuttle, to drive the shuttle on the ground surface or on horizonal planes outside the racking construction within the automated warehouse. The other of the further wheels may be lifted and unconnected with the horizontal surfaces during this driving of the shuttle on the ground surface or on horizonal planes outside the racking construction. Also these further wheels may be extendible and retractable towards the lateral side of the shuttle to enable these other wheels driving on horizontal tracks within the racking construction.

Hence the shuttle may comprise two independent driving means, one to drive the shuttle in horizontal direction, e.g. by driving two or more of the further wheels, and a second driving means to drive in non-horizontal direction, by driving at least one of the at least two wheels, at least one at each lateral side of the shuttle.

For the non-horizontal climbing movement, two separate motors may be used, one to drive the wheel, like a gear wheel, at one lateral side of the shuttle, to effectuate the horizontal climbing movement. The use of two separate motors is advantageous to steer and control the left versus the right side of the shuttle. Left versus right climbing variations due to a non-synchronously climbing may be adjusted. As an alternative, when using only one motor to drive the wheels, like a gear wheel, at both lateral sides of the shuttle simultaneously, left versus right climbing variations due to a non-synchronously climbing may not be adjusted easily, if adjustable at all.

An automated warehouse may comprise at least one shuttle according to the second aspect of the invention. The automated warehouse may comprise a racking with at least one non-horizontally oriented, optionally toothed, surface being part of the non-horizontal track.

A shuttle according to the first aspect of the invention may be provided with one, more than one or even all particular features of the shuttles according to this second aspect of the invention.

According to a third, independent aspect, a shuttle for three-dimensionally transporting goods in an automated warehouse, said shuttle being adapted for moving at least non-horizontally in an automated warehouse along a non-horizontal track. The shuttle comprises a frame for carrying the payload. The shuttle has two lateral sides, at each lateral side the shuttle comprises at least one pair of wheels, said pairs of wheels being adapted for moving said shuttle at least non-horizontally in an automated warehouse along a non-horizontally track. For each pair of wheels, at least one of said wheels is a pinion-, sprocket- or gear wheel having its axis of rotation non-parallel to the lateral side of the shuttle. The at least one of said wheels being a pinion-, sprocket- or gear wheel is or are provided with a teeth mesh system enabling said at least one of said wheels being a pinion-, sprocket- or gear wheel to rotate in only one direction when a force in axial direction is applied to the teeth of said wheel.

This teeth mesh system may comprise for the at least one of said wheels being a pinion-, sprocket- or gear wheel having at the radial face side of the wheel, which is oriented outwards from the shuttle,
- at least part of the edge between the radial face side of each tooth and at least one flank of the teeth is chamfered according to a plane having its normal non-parallel to the plane defined by the axis of rotation of the wheel and the middle point of the top land of the tooth, and
- a one-way clutch bearing is provided between the pinion-, sprocket- or gear wheel and the axis of rotation.

The provision of teeth mesh system to a shuttle for three-dimensionally transporting goods in an automated warehouse according to the third aspect of the invention, will enable the at least one wheels of the shuttle to connect and mate smoothly with the non-horizontal track the wheel is to move along. Early wear of the teeth may be reduced or even prevented.

The provision of this teeth mesh system may be used in order to provide a shuttle according to the first aspect of the invention. The provision of this teeth mesh system may be combined with the features of a shuttle according to the second aspect of the invention.

According to a fourth, independent aspect, a shuttle for three-dimensionally transporting goods in an automated warehouse is provided, the shuttle being adapted for moving at least non-horizontally in an automated warehouse along a non-horizontal track. The shuttle comprises a frame for carrying the payload. The shuttle has two lateral sides, at each lateral side the shuttle comprises at least one wheel, said wheels being adapted for moving said shuttle at least non-horizontally in an automated warehouse along a non-horizontally track pair of wheels. These wheels are pinion-, sprocket- or gear wheels having its axis of rotation non-parallel to the lateral side of the shuttle. At the radial face side of the wheel, which radial face side is oriented outwards from the shuttle, at least part of the edge between the radial face side of each tooth and at least one flank of the teeth is chamfered according to a plane having its normal non-parallel to the plane defined by the axis of rotation of the wheel and the middle point of the top land of the tooth. When the wheel is to engage with the teeth of a toothed bar, the teeth of the toothed bar may contact to the chamfered teeth of the wheel. The teeth of the toothed bar may apply a force to the wheel, the force being in a direction aligned with the axis of the wheel This force may make the wheel rotate. As such the teeth of the wheel and the teeth of the toothed bar will slide more easily and engage without causing large damage to either one of the teeth.

The provision of such chamfered teeth, at least at one flank of the teeth, allows the teeth of the wheel and the teeth of the teethed surface with which it is to engage and interact, goes smoothly and without impact or blocking forces.

Possibly both flanks of its teeth are chamfered in axial direction at the radial face of the wheel oriented outwards from the shuttle.

According to some embodiments of shuttles of the fourth aspect of the invention, at each lateral side the shuttle comprises a pair of wheels, said pairs of wheels being adapted for moving said shuttle at least non-horizontally in an automated warehouse along a non-horizontally track, at least one of said pair of wheels is one of said pinion-, sprocket- or gear wheels, the two wheels of each pair of wheels may be mutually connected by means of a rigid connection means, the rigid connection means being rotationally connected along a pivot axis to the frame, the shuttle may comprise at least one actuator to control and set the rotational position of the frame and connecting means.

According to some embodiments of shuttles of the fourth aspect of the invention, for each of the pinion-, sprocket- or gear wheels a one-way clutch bearing may be provided between the pinion-, sprocket- or gear wheel and the axis of rotation.

The provision of the chamfered sides of the teeth is preferably such that chamfered side or surface is oriented away from the free rotating direction of the bearing. The pinion-, sprocket- or gear wheels may be mount on an axis which allows linear movement of the wheel in axial direction. In a first linear position, the teeth may be free of contact with the toothed surface (like a toothed bar) it is to interact with. In a second linear position, the teeth may be in contact with the toothed surface. During the linear movement of the wheel from the first to the second position, the teeth of the wheel and the teeth of the bar are to mesh. The chamfered side or surface being oriented away from the free rotating direction of the bearing, causes the wheel to rotate in the free rotating direction of the bearing during the teeth of the wheel meshing with corresponding teeth of a toothed surface, like a toothed bar.

According to some embodiments of the present invention, the angle between the plane perpendicular to the axis of rotation of the wheel, and the chamfered flank, may be in the range of 25° to 50°, e.g. 40° to 50°, e.g. 40°, 41°, 42°, 43°, 44°, 45°, 46°, 47°, 48°, 49° or 50°. The angle between the plane perpendicular to the axis of rotation of the wheel, and the chamfered flank is the smallest angle measurable between these two planes.

The teeth may be chamfered over a part of the teeth face width. Preferably substantially the whole teeth face is chamfered over its total width The chamfered flank may extend downwards in depth of the teeth up to or even beyond the pitch circle, even up to the dedendum or root circle.

According to some embodiments, a gear wheel is used to cause the non-horizontal climbing of the shuttle. Preferably the gear wheel has a module in the range of 3 to 5, most preferably being a module 4 gear wheel. The toothed bar to cooperate with this gear wheel has the same module, preferably being module 4.

In case the shuttle is part of a warehouse comprising toothed bars to interact with the pinion-, sprocket- or gear wheels, preferably the teeth of the toothed bars are chamfered as well, at their side oriented towards the shuttles, i.e. inwards the aisles of the warehouse. One flank of its teeth is chamfered at their side oriented towards the shuttles. Optionally both flanks of its teeth are chamfered at their side oriented towards the shuttles.

The inclination or angle of the chamfering corresponds preferably to the angel of the chamfered sides of the teeth of the shuttles. Hence the angel of the chamfered sides of the teeth of the shuttles may be in the range of 25° to 50°, e.g. 40° to 50°, e.g. 40°, 41°, 42°, 43°, 44°, 45°, 46°, 47°, 48°, 49° or 50°.

An automated warehouse may comprise at least one shuttle according to the third or fourth aspect of the invention. The automated warehouse may comprise a racking with at least one non-horizontally oriented, optionally toothed, surface of a non-horizontal track.

A shuttle according to the first and/or third aspect of the invention may be provided with one, more than one or even all particular features of the shuttles according to this fourth aspect of the invention. Similarly, a shuttle according to the second aspect of the invention may be provided with one, more than one or even all particular features of the shuttles according to this fourth aspect of the invention.

According to a fifth, independent aspect of the invention, a shuttle for three-dimensionally transporting goods in an automated warehouse, e.g. a shuttle adapted for moving at least vertically in an automated warehouse is provided. The shuttle is adapted for moving at least non-horizontally in an automated warehouse along a non-horizontal track. The shuttle comprises a frame for carrying the payload. The shuttle has two lateral sides, at each lateral side the shuttle comprises at least one wheel, said wheels being adapted for moving said shuttle at least non-horizontally in an automated warehouse along a non-horizontally track. These wheels are pinion-, sprocket- or gear wheels having its axis of rotation non-parallel to the lateral side of the shuttle. For each of the pinion-, sprocket- or gear wheels a one-way clutch bearing is provided between the pinion-, sprocket- or gear wheel and the axis of rotation.

According to some embodiments of the invention, the free rotating direction of the one way bearings may be upwards and directed away from the position for carrying the payload on the frame.

The one-way clutch bearing may have several advantages. When a shuttle is deposit onto a driving rail at the end of the descending, the one-way clutch bearing will eventually rotate in its free rotating direction and the motor torque of the motors causing the non-horizontal movement, hence descending, will become zero. This indicates that the shuttle reached the landing position. Hence the torque value becoming zero may be used as a control sign to end the descending. Given the tolerances of the tracking and the position of the horizontal or driving rails, relaying on only the encoder of the motors causing the non-horizontal movement, i.e. climbing motors, may be less precise and may lead to a less precise and more roughly landing of the shuttle and would cause early wear.

When the shuttle is stuck in the climbing towers, the shuttle may be hoisted from an above level thanks to the presence of the one-way clutch bearing. Even when the climbing motors and brakes are blocking, the one-way clutch bearing may rotate in the non-horizontal direction, i.e. climbing direction, allowing the shuttle to be lifted.

The free rotating direction of the wheels preferably chosen such that the free rotation direction would cause the wheel to move upwards along the toothed surface the wheel is to cooperate.

The shuttle having one such a pinion-, sprocket- or gear wheel at each of its lateral sides, which are to interact and engage with toothed bars of the warehouse, and the wheels being provided with a one way bearing having its free rotation direction such the wheel would climb, i.e. move at least in vertical direction upwards when rotating in this direction, may be in several circumstances in the warehouse.

In a first circumstance, the shuttle having its wheels engaging with a toothed surface, like a toothed bar, is to move upwards. The shuttle is not carried vertically by any other means but the pinion-, sprocket- or gear wheel engaging in the corresponding toothed bar. The axis of the wheel is driven, e.g. by a motor, in the free rotation direction of the one way bearing. The load of the shuttle, optionally increased by a payload, will tend to pull the shuttle down, which in its turn would make the wheel turn in the blocked rotation direction, or would cause the bearing to turn relative to the axis in the blocked rotation direction. As this rotation is prevented by the blocking of the bearing, the wheel will rotate in upwards direction and lift the shuttle.

In a second circumstance, the upwards moving is interrupted, the shuttle having its wheels engaging with a toothed surface, like a toothed bar. The motor brake is activated. The load of the shuttle, optionally increased by a payload, will tend to make the shuttle moving downwards, hence tend to rotate the wheel in the blocked rotation direction as the axis is prevented to rotate. As this rotation is prevented, the shuttle will not move up- nor downwards.

In a third circumstance, the shuttle having its wheels engaging with a toothed surface, like a toothed bar, is to move downwards. The axis is rotated such that the wheel moves downwards on the toothed bar. The load of the shuttle, optionally increased by a payload, will tend to make the shuttle moving downwards faster, hence tend to rotate the wheel in the blocked rotation direction as the axis at higher rotational speed. This would cause the bearing to turn relative to the axis in the blocked rotation direction. As this relative rotation is prevented, the shuttle will move downwards together with the rotation of the wheel caused by the rotation of the axis.

According to some embodiments of shuttles of the fifth aspect of the invention, at the radial face side of the wheel which is oriented outwards from the shuttle, at least part of the edge between the radial face side of each tooth and at least one flank of the teeth is chamfered according to a plane having its normal non-parallel to the plane defined by the axis of rotation of the wheel and the middle point of the top land of the tooth.

According to some embodiments of shuttles of the fifth aspect of the invention, at each lateral side the shuttle comprises a pair of wheels, said pairs of wheels being adapted for moving said shuttle at least non-horizontally in an automated warehouse along a non-horizontally track, at least one of said pair of wheels is one of said pinion-, sprocket- or gear wheels, the two wheels of each pair of wheels being mutually connected by means of a rigid connection means, the rigid connection means may be rotationally connected along a pivot axis to the frame, the shuttle comprises at least one actuator to control and set the rotational position of the frame and connecting means.

An automated warehouse may comprise at least one shuttle according to the fifth aspect of the invention. The automated warehouse may comprise a racking with at least one non-horizontally oriented, optionally toothed, surface of a non-horizontal track.

The provisions of one or more features of this fifth independent aspect of the invention, combined with one or more features of the fourth aspect of the invention, may provide shuttles according to the third aspect of the invention. A shuttle according to the first aspect of the invention may be provided with one, more than one or even all particular features of the shuttles according to this fifth aspect of the invention. Similarly, a shuttle according to the second aspect of the invention may be provided with one, more than one or even all particular features of the shuttles according to this fifth aspect of the invention. Also, a shuttle according to the third or fourth aspect of the invention may be provided with one, more than one or even all particular features of the shuttles according to this fifth aspect of the invention.

According to a sixth independent aspect of the invention, a shuttle for three-dimensionally transporting goods in an automated warehouse, e.g. a shuttle adapted for moving at least vertically in an automated warehouse is provided. The shuttle has at each of its two lateral sides
- a climbing wheel for moving the shuttle in a non-horizontal direction in the warehouse, these climbing wheels are mutually opposite and are each mounted on mutually parallel axes of rotation, each climbing wheel being linearly displaceable in a direction of its rotation axis between a retracted an and an extended position, each of these axes of rotation being pivotable around a pivot axis;
- a compressible locking pin being co-pivotable and linearly displaceable with the climbing wheel, said locking pin being uncompressed when the climbing wheel is in retracted position;
wherein the shuttle comprises a control means to detect at least one compression and at least one decompression of each of said locking pins during the displacement of the climbing wheels between extended and the retracted position.

According to some embodiments, each climbing wheel may be linearly displaceable in a direction of its rotation axis between a retracted an and an extended position by extending or retracting a support, like a rigid connection means, e.g. a plate, on which the climbing wheel is mounted.

The locking pin, the climbing wheel and the axle driving this climbing wheel may be mounted on one and the same plate, which plate is pivotable around a pivot axis. This plate may be linearly moveable in a direction parallel to the pivot axis, which may be parallel to the axle. When the plate extends from a retracted position to the extended position, the locking pin may contact the side of the nonhorizontal track and may be compressed due to the linear outward movement. Once the pivotable plate pivots to engage the climbing wheel with the track, the obstruction of the locking pin may be removed as the locking pin also moves sideways. The locking pin may slide from the side of the nonhorizontal track and may extend to its uncompressed position. These actions may trigger a control means to detect at least one compression and at least one decompression of the locking pin. When the provision of the two signals indicates a complete engagement of the climbing wheel into the track. Hence when these signals are provided at both lateral sides of the shuttle, the shuttle is ready to move nonhorizontally and the movement may be activated. When at one of the lateral sides the two signals are not provided, the shuttle is not ready to move nonhorizontally, and this movement is not activated.

The climbing wheel is adapted to have the shuttle moving in the warehouse in a non-horizontal direction. The climbing wheel may be a toothed wheel, like a pinion, gear wheel or sprocket, and may interact with a toothed surface like a toothed bar, e.g. a gear rack. The climbing wheel is retractable from and extendible to the non-horizontal track, which e.g. may be a U or C shaped profile, where the toothed bar or surface may be positioned at one of the flanges. A pressure wheel may be provided and adapted to exercise force to the opposite flange at the inner side of the profile. Once reaching forward into the non-horizontal track, the climbing wheel is to be coupled to the side it is to contact the track. E.g. when a toothed wheel is provided to climb on a toothed surface, the teeth of the wheel and surface are to be mesh with one another before the shuttle can start its climbing action, hence before the wheel is in its engaged position.

When the wheel, starting from its retracted position, is inserted in the track, the track and the position of the locking pin may be tuned such that the locking pin is compressed when the wheel is inserted in the track. After the wheel is inserted, the axis of rotation of the wheel is pivoted around the pivot axis in order to have the teeth engaging with each other. The maximum rotation is achieved when a complete engagement is reached. The track and the position of the locking pin may be tuned such that the locking pin is decompressed when the complete engagement is reached. The control means hence detect at least one compression and at least one decompression of the locking pin during the displacement of the climbing wheels between extended, non-engaged and extended, engaged Positions. As the control unit may obtain signals of the control means, the control unit of the shuttle may have confirmation of the wheel having reached its engaged position.

The track and the position of the locking pin in decompressed position when the wheel is in extended and engaged position, may be tuned such that the locking pin prevents the wheel to disengage from the toothed surface, e.g. during abrupt interruption of the climbing movement of the shuttle. Once the locking pin is sufficiently far retracted from the track, the locking pin will be decompressed. To do so, the wheel will first be disengaged from the toothed bar, by pivoting the plate in the opposite direction by means of the linear actuator. As soon as the pressure between wheel and toothed bar is sufficiently reduced, the wheel and lock pin will be retracted towards the shuttle.

According to some embodiments of shuttles of this sixth aspect, the locking pin may be a spring-loaded compressible locking pin.

According to some embodiments of shuttles of this sixth aspect, the locking pin may pivot with the pivoting of the climbing wheel unit.

According to some embodiments of shuttles of this sixth aspect, the locking pin may be a metal pin or cylinder.

According to some embodiments of shuttles of this sixth aspect, the front surface or point of locking pin may be positioned between the position of the two radially extending surfaces of the climbing wheel.

The radially extending surfaces of the wheel are the front and back surface of the wheel, both preferably being perpendicularly to, and radially extending from the direction of the axis of rotation.

According to some embodiments of shuttles of this aspect of the invention, at each lateral side the shuttle comprises a pair of wheels, said pairs of wheels being adapted for moving said shuttle at least non-horizontally in an automated warehouse along a non-horizontally track, at least one of said pair of wheels is a pinion-, sprocket- or gear wheel, the two wheels of each pair of wheels may be mutually connected by means of a rigid connection means, the rigid connection means being rotationally connected along a pivot axis to the frame, the shuttle may comprise at least one actuator to control and set the rotational position of the frame and connecting means. The locking pin may be mounted on this rigid connection means, adjacent said pinion-, sprocket- or gear wheel. The pivot axis around which each of the axes of rotation is pivotable, may be the same pivot axis around which the rigid connection means is rotationally connected to the frame.

The center of the locking pin is positioned preferably under, e.g. just under the center of the adjacent climbing wheel, like said pinion-, sprocket- or gear wheel, e.g. up to 10mm above the center of the adjacent climbing wheel. most preferably the locking pin is located at the opposite wall of the track of the climbing wheel. If due to an accidental stop while moving upwards a disengagement of the climbing wheel from the toothed bar would occur, the locking pin will contact the wall opposite of the track, ensuring that the climbing wheel stays sufficiently engaged. As such the shuttle gets blocked in the track by the climbing wheel and the locking pin. A distance between the outer wall of said locking pin and the track may be in the range of some millimeters, like in the range of 2 to 4 mm, e.g. 3mm. A too large distance may not guarantee this blocking, while a too small distance may cause the shuttle to block in its movement in the non-horizontal track due to the tolerances of the track itself.

An automated warehouse may comprise at least one shuttle according to the fifth aspect of the invention. The automated warehouse may comprise a racking with at least one non-horizontally oriented, optionally toothed surface being part of a non-horizontal track.

The shuttle according to this sixth aspect of the invention, may have one, more than one, or all features of a shuttle according to one or more of the first, second, third, fourth or fifth aspect of the invention. The shuttle according to the first, second, third , fourth or fifth aspect of the invention may have one, more than one, or all features of a shuttle according this sixth aspect of the invention.

The climbing wheel at each lateral side of the shuttle may be the pinion-, sprocket- or gear wheel at that lateral side of the shuttle.

According to a seventh aspect of the invention, a method to couple a shuttle according to the fifth aspect of the invention, to the non-horizontally oriented toothed bar, the method comprises
- providing shuttle according to the fifth aspect of the invention;
- providing a rack comprising non-horizontally oriented toothed bars coupled to a wall of a concave profiled stud of the rack;
- moving the climbing wheel being in retracted position in front of opening of concave profiled stud of the rack;
- moving the climbing wheel into the opening of concave profiled stud of the rack, thereby compressing the locking pin;
- pivoting the climbing wheel to engage the climbing wheel to the toothed bar, the locking pin decompressing when a complete engagement coupling is realized.

According to an eight, independent aspect of the invention, a shuttle for three-dimensionally transporting goods in an automated warehouse, e.g. a shuttle adapted for moving at least vertically in an automated warehouse is provided. The shuttle has at each of its two lateral sides a climbing wheel for moving the shuttle in a non-horizontal direction in the warehouse. The shuttle comprises a measuring means to measure the angular positions of the climbing wheels round their axes of rotation. Such measuring means may e.g. be the encoder of the motor driving the climbing wheel, provided the climbing wheel is always rotated when the motor is rotated.

According to some embodiments of shuttles of this eighth aspect the measuring means may permanently measure the angular positions of the climbing wheels round their axes of rotation.

According to some embodiments of shuttles of this eighth aspect the climbing wheel may be toothed wheels.

These wheels are adapted to move the shuttle in a non-horizontal direction in the warehouse, along a toothed surface.

According to some embodiments of shuttles of this seventh aspect the climbing wheels may be linearly displaceable in a direction of their rotation axis between a retracted an extended position.

As the motor control system knows the angular position of the wheel, hence of the teeth, the meshing of the teeth of the wheel and the toothed surface may be realized more accurately and with less possible clogging and collateral of the teeth. When the wheel needs to mesh with the toothed surface, the position of the teeth of the wheel is known and may be adjusted so a collision between the teeth is avoided during the pivoting of the wheel towards the mating track this avoids damage to the wheels and the toothed surfaces and provides time saving.

Each time after a successful engagement, the angular position of the climbing wheel is re-initialized in the controller, avoiding tolerance stack-up while operating many climbing and driving cycles.

According to some embodiments of shuttles of this eighth aspect the climbing wheels may be mutually opposite and may each be mounted on mutually parallel axes of rotation.

The shuttle according to this eighth aspect of the invention may have one, more than one, or all features of a shuttle according to one or more of the first, second, third, fourth, fifth or sixth aspect of the invention. A shuttle according to one or more of the first, second, third, fourth, fifth or sixth aspect of the invention may have one, more than one, or all features of a shuttle according to this eighth aspect of the invention.

The climbing wheel at each lateral side of the shuttle is the pinion-, sprocket- or gear wheel at that lateral side of the shuttle.

An automated warehouse may comprise at least one shuttle according to the eighth aspect of the invention. The automated warehouse may comprise a racking with at least one non-horizontally oriented, optionally toothed, surface being part of a non-horizontal track.

When gear wheels are used in line with any of the first to the eight aspect of the present invention, possibly spur gears are used.

According to a ninth independent aspect of the invention, a shuttle for three-dimensionally transporting goods in an automated warehouse, e.g. a shuttle adapted for moving at least vertically in an automated warehouse is provided. The shuttle has at each of its two lateral sides at least one climbing wheel for climbing along a non-horizontally oriented toothed surface. The climbing wheels are helical gear wheels.

In helical gear wheels, the top of the teeth or the intersection line of the face and the top land of the teeth, is not parallel to the axis of rotation on the wheel but slanted. Dependent on the face width of the tooth and the inclination between the top of the teeth or the intersection line of the face and the top land on the one hand, and the axis of rotation of the wheel on the other hand, more than one tooth may be in an engaging positions with teeth of the toothed surface, like a toothed bar, which has similar helical gear teeth.

According to some embodiments of shuttles of this eight aspect, the climbing wheels may be mutually opposite and are each mounted on mutually parallel axes of rotation.

According to some embodiments of shuttles of this eight aspect, the angle between the top of the teeth or the intersection line of the face and the top land, and the axis of rotation of the wheel is in the range of more than 0 to 45°.

According to some embodiments of shuttles of this eight aspect, the teeth having at least one flank being chamfered in axial direction at the radial face of the wheel oriented outwards from the shuttle.

The shuttle according to this ninth aspect of the invention, may have one, more than one, or all features of a shuttle according to one or more of the first, second, third, fourth, fifth, sixth or eight aspect of the invention. The shuttle according to one or more of the first, second, third, fourth, fifth, sixth or eight aspect of the invention may have one, more than one, or all features of a shuttle according to this ninth aspect of the invention.

The climbing wheel at each lateral side of the shuttle is the pinion-, sprocket- or gear wheel at that lateral side of the shuttle.

An automated warehouse may comprise at least one shuttle according to the ninth aspect of the invention. The automated warehouse may comprise a racking with at least one non-horizontally oriented, optionally toothed, surface being part of a non-horizontal track.

According to a tenth aspect of the invention, an automated warehouse is provided, which comprises a racking with at least one non-horizontally oriented toothed surface being part of a non-horizontal track, the toothed surface being provided with helical gear teeth.

According to some embodiments of warehouses according to this tenth aspect of the invention, the warehouse further comprises at least one shuttle according to the ninth aspect of the invention, the helical gear wheels of the shuttle may be adapted to couple to said toothed surface.

The use of helical gear wheels, optionally with helical gear profiled surfaces, like a helical gear rack, avoid to a large extent the creation of vibrations in the warehouse and provides a more steady and silent movement of each of the shuttles moving in one a non-horizontally oriented direction in the warehouse. The meshing and decoupling of the surface being provided with helical gear teeth, and the helical gear wheels of the shuttle is simplified and just happens with less coupling issues and disruptions. The operation of the shuttles in the warehouse is less cumbersome.

The shuttle according to any of the first, second, third, fourth, fifth, sixth , eighth or ninth aspect of the invention, may comprise a drive mechanism, which may include one or more motors, like electrical motors, a power bank, a transmission system to rotate at least the pinion-, sprocket- or gear wheels, a gear box and alike. The shuttle may hence comprise two drive mechanisms, one for rotating at least the pinion-, sprocket- or gear wheels on one of the longitudinal sides of the shuttle. The shuttle may hence comprise one drive mechanism for rotating at least the pinion-, sprocket- or gear wheels on both of the longitudinal sides of the shuttle. In case of a plurality of drive mechanisms, the elements of the drive mechanism may be different or identical.

The shuttle according to any of the first, second, third, fourth, fifth, sixth, eighth or ninth aspect of the invention, may comprise only one pinion-, sprocket- or gear wheel at each longitudinal side of the shuttle.

The shuttle according to any of the first, second, third, fourth, fifth, sixth, eighth or ninth aspect of the invention, may comprise one or more pinion-, sprocket- or gear wheels at each longitudinal side of the shuttle, each of which are mounted on an axis which allows linear movement of the wheel in axial direction. In a first linear position, preferably the position where the wheel is retracted and is closest the lateral side of the shuttle, the teeth may be free of contact with the toothed surface (like a toothed bar) it is to interact with. In a second linear position, preferably the position where the wheel is extended and is farthest remote from the lateral side of the shuttle, the teeth may be in contact with the toothed surface. I The shuttle may comprise a drive mechanism to effectuate this linear movement from the first to the second linear position and vice versa, which driving mechanism may comprise one or more motors, like electrical motors, a power bank, a transmission system to linearly displace the wheel or wheels, a gear box and alike. The shuttle may comprise more than one drive mechanisms, each of these to effectuate the linear movement of one of the wheels. These plurality of drive mechanisms may be similar or identical one to the other.

The shuttle may be equipped with a linear actuator, providing the engagement of the climbing gear into the mating track. This actuator may be driven by an electoral motor, a transmission system, or any similar or suitable system to move a linear actuator between at least two positions.

The shuttle according to any of the first, second, third, fourth, fifth, sixth, eighth or ninth aspect of the invention, may comprise, at each lateral side, at least one, but preferably more than one, like two, three, four or more wheels to move the shuttle in a horizontal direction on horizontal or substantially horizontal surfaces of tracks. These wheels are referred to as horizontal driving wheels, and typically are circular wheels. The shuttle may have a dedicated horizontal moving system to move along these substantially horizontal, such as horizontal direction. These wheels are coupled to the frame of the shuttle. This dedicated horizontal moving system may comprise one or more drive mechanisms, each drive mechanism to drive one, more than one or all of the horizontal driving wheels.

The horizontal moving system may be combined with the non-horizontal moving system, while switching may be realized by a clutch system, as both movements preferably never coincide.

The dedicated horizontal moving system may comprise two drive mechanisms, each drive mechanism to drive one, more than one or all of the horizontal driving wheels at one lateral side of the shuttle. These two drive mechanisms preferably do not drive all the all of the horizontal driving wheels at one lateral side of the shuttle, but may drive only one wheel at a lateral side of the shuttle.

For each of the wheels at each longitudinal side of the shuttle, the wheels may be mounted on an axis which allows linear movement of the wheel in axial direction. In a first linear position, the wheel is in a position to contact and hence drive on horizontal tracks being part of the racking structure the shuttle is intended to move into. Preferably this first position is the extended position of the wheel, where the wheel is farthest remote from the lateral side of the shuttle. In a second linear position, preferably the retracted position of the wheel, where the wheel is closest to the lateral side of the shuttle, the wheel is in a position to contact and hence drive on horizontal planes being part of the warehouse the shuttle is intended to move into. The shuttle may comprise a drive mechanism to effectuate this linear movement, which driving mechanism may comprise one or more motors, like electrical motors, a power bank, a transmission system to linearly displace the wheel or wheels, a gear box and alike. The shuttle may comprise more than one such drive mechanisms, each of these to effectuate the linear movement of one, more or all of the wheels at one lateral side of the shuttle. These plurality of drive mechanisms may be similar or identical one to the other.

Preferably the shuttle comprises a control unit to activate or deactivate all the drive mechanisms.

Preferably, the shuttle comprises one pinion-, sprocket- or gear wheels at each longitudinal side of the shuttle, these pinion-, sprocket- or gear wheels being positioned near one of the traverse sides of the shuttle, while the shuttle comprises at each lateral side, one driven horizontal driving wheel near the other of the traverse sides of the shuttle, and one or more non driven, free rotating horizontal driving wheels at each lateral side, adapted to carry the shuttle substantially horizontal during horizontal displacement in the racking structure. The shuttle comprises a control unit to bring and keep the pinion-, sprocket- or gear wheels to their extended position and to engage into the non-horizontal tracks of the racking structure, while the horizontal driving wheels are in retracted position, and to bring and keep the pinion-, sprocket- or gear wheels to their retracted position, while the horizontal driving wheels are in extended position to move the shuttle substantially horizontally.

According to some embodiments of the invention, the shuttle may comprise one pinion-, sprocket- or gear wheel at each longitudinal side of the shuttle, these pinion-, sprocket- or gear wheels being positioned near one of the traverse sides of the shuttle, the shuttle comprising at each lateral side one driven horizontal driving wheel near the other of the traverse sides of the shuttle, and one or more non driven, free rotating horizontal driving wheels at each lateral side, all of said pinion-, sprocket- or gear wheels and said horizontal driving wheel being linearly movably mounted on their axes of rotation between a first and a second position, the first position is the position in which the wheel is farthest remote from the lateral side of the shuttle, the second position, the position in which the wheel is closest to the lateral side of the shuttle.

At the lower side of the shuttle, at the traverse sides of the shuttle where the pinion-, sprocket- or gear wheels being positioned, a swivel wheel may be provided. This swivel wheel is adapted to carry the shuttle, in cooperation with the driven horizontal driving wheels, to drive the shuttle on horizontal or substantially horizontal planes, while the other, free running horizontal driving wheels may not be in contact with said surface. This swivel wheel is positioned such it hangs free between the horizontal or substantially horizontal tracks when the shuttle is moved on these tracks.

Steering outside the rack is realized with 2 independently powered driving motors, and with the free rotating swivel wheel. A localization reader, e.g. OR-code reader, communicates the actual position and the moving direction of the shuttle to the local shuttle controller.

According to a further, eleventh and independent aspect of the invention, a shuttle for three-dimensionally transporting goods in an automated warehouse, said shuttle being adapted for moving at least non-horizontally in an automated warehouse along a non-horizontal track, the shuttle comprising a frame for carrying the payload, the shuttle having two lateral sides, at each lateral side the shuttle comprises at least one pair of wheels, said pairs of wheels being adapted for moving said shuttle at least non-horizontally in an automated warehouse along a non-horizontally track, for each pair of wheels, at least one of said wheels is a pinion-, sprocket- or gear wheel having its axis of rotation non-parallel to the lateral side of the shuttle, said at least one of said wheels being a pinion-, sprocket- or gear wheel is have a polymeric outer surface, optionally are a polymeric wheel.

Optionally, the polymer of the polymeric wheel or of the wheel with the polymeric outer surface may be any suitable polymer, preferably a thermoplastic polymer, more preferably a polymer adapted to be injection molded, most preferably polyamide (PA), like aromatic, aliphatic or semi-aromatic polyamide, like PA6, PA11, PA12, PA6.6, PA6.10, PA6.12, PA10.10, PA10.12 or mixtures thereof. The wheel may as well be a composite wheel, comprising on of these polymers as a polymeric matrix and reinforcing elements like reinforcing fibers or alike. Reinforcing fibers may be e.g. glass fibers, high tenacity polymeric fibers, and alike. The wheel may be a metal wheel being coated with a polymeric coating. As a preferred polymeric wheel, a glass fiber reinforced PA polymer wheel is used.

The shuttle according to this eleventh aspect of the invention, may have one, more than one, or all features of a shuttle according to one or more of the first, second, third, fourth, fifth, sixth, eighth or ninth aspect of the invention. The shuttle according to one or more of the first, second, third, fourth, fifth, sixth, eighth or ninth aspect of the invention may have one, more than one, or all features of a shuttle according to this eleventh aspect of the invention.

According to a twelfth aspect of the invention, one, and preferably more than one shuttle according to any one of the first, second, third, fourth, fifth, sixth, eight, ninth or eleventh aspect of the invention is used to move goods in an automated warehouse. In case more than one shuttle are used in the warehouse, the shuttles may be different, similar or identical one to the other.

According to a thirteenth aspect of the invention, an automated warehouse is provided, one, preferably more than one shuttle according to any one of the first, second, third, fourth, fifth, sixth, eight, ninth or eleventh aspect of the invention. In case more than one shuttle is part of the warehouse, the shuttles may be different, similar or identical one to the other.

According to some embodiments of the thirteenth aspect of the invention, an automated warehouse comprises two or more storage structures structured along an aisle between said storage structures, said automated warehouses comprises an automated warehouse shuttle system comprising a track system comprising a non-horizontal track system comprising at least one pair of tracks, both tracks arranged in a non-horizontal plane along said aisle of the warehouse, one track of said pair of tracks is at a first side of the aisle in contact with the first of the at least two storage structures, the other track of said pair of tracks is at the second side of the aisle in contact with the second of the at least two storage structures, said automated warehouse shuttle system comprises at least one shuttle according to one of the preceding claims, said shuttle being adapted for moving at least non-horizontally along said pair of non-horizontal tracks.

The automated warehouse may comprise one or more racking structures, each comprising two racks of three or more storage bays, built along one aisle between these storage racks. Each aisle may comprise at least one pair of tracks for which both tracks arranged in a non-horizontal plane along this aisle of the warehouse. One track of the pair of tracks is at a first side of the aisle in contact with the first of one of the storage racks delimiting the aisle, the other track of the pair of tracks is at the second side of the aisle in contact with a second of the storage racks delimiting the aisle. The automated warehouse shuttle system comprises at least one shuttle according to the first, second, third, fourth, fifth, sixth, eight, ninth or eleventh aspect of the invention, which shuttle or shuttles each are adapted for moving at least non-horizontally along the pairs of non-horizontal tracks.

Each aisle may comprise one, two, three, four, or even more pairs of tracks, all pairs arranged in a non-horizontal plane along this aisle of the racking structure.

According to some embodiments, the track system may comprise a horizontal track system comprising at least two pairs of rails, both arranged in a substantially horizontal plane along said at least one of said aisles of the warehouse, said at least two pairs of rails being at a different height in said aisle. Of each pair of rails, one rail is at a first side of the aisle in contact with the first of the at least two storage racks, the other rail of said pair of rails is at the second side of the aisle in contact with the second of the at least two storage racks, said shuttle being adapted for moving at least horizontally along said pair of rails.

Each aisle may comprise one, two, three, four, or even more pair of such rails, all pairs preferably arranged in a substantially horizontal plane along this lane of the warehouse, and within said aisle, all pairs of rails being provided at a different height in the aisle.

The warehouse may be provided with transverse aisles connecting said substantially parallel racking aisle structures, which transverse aisles may or may not be provided with rails and/or tracks. Optionally, inclined planes may connect tracks between various levels of the storage structure. The warehouse may comprise one or more substantially horizontal plane, one being the ground level on which the warehouse is constructed and/or supported. The warehouse may be provided with mezzanine constructions, being a horizontal plane or floor, extending outside one of the lane. The mezzanine constructions may be used to temporarily park a shuttle, in order to allow other shuttles to pass or to arrive at the track level of this mezzanine construction. The mezzanine constructions may include pick- and deposit stations, to be used for the inbound or outbound of goods.

The storage structures may comprise a plurality of horizontal and vertical elements, and optionally further comprise brackets to stiffen the structure. The storage structures may comprise uprights or posts, horizontal beams, horizontal bracing and diagonal bracings. The non-horizontal tracks may be provided parallel with and optionally connected to the uprights. The rails may be provided parallel with and optionally connected to the horizontal beams.

All these uprights, beams and bracings may be provided as metal profiled elements, like extruded metal profiles of rolled metal, preferably steel, profiles.

The rails in the storage structure may be profiled, like L-profiled elements, such as L-profiled metal, preferably steel profiles.

The tracks in the storage structure may be profiled, like U, C, C+ or Omega profiled elements, preferably metal, preferably steel rolled or extruded profiles.

The tracks may be profiled such the profile has a web, delimited by two flanks. One of the flanks may be provided as a profiled, such as toothed surface, adapted to engage with the pinion-, sprocket- or gear wheel or wheels. This flank may be provided with a gear rack or toothed bar along which the pinion-, sprocket- or gear wheels may climb or descend. The side of the teeth oriented away from the web, may be chamfered, in order to allow easier engagement of the teeth of the pinion-, sprocket- or gear wheels and the gear rack. Hence the angel of the chamfered sides of the teeth of the shuttles may be in the range of 25° to 50°, e.g. 40° to 50°, e.g. 40°, 41°, 42°, 43°, 44°, 45°, 46°, 47°, 48°, 49° or 50°. Alternatively the side of the teeth are profiled and provided with a convex curvature or arcs, such as a cylindrical, a truncated conical surface a or conical surface, or a section of such volumes, the section being the result of the section of a cylinder, truncated cone or cone according to a plane parallel to the axis of the cone, truncated cone or cylinder.

The teeth of the gear rack may be provided with helical gear teeth, allowing engagement with pinion-, sprocket- or gear wheels being helical gear wheels. Optionally, these tracks, such as the gear racks, may be polymeric tracks, provided from e.g. any suitable polymer, preferably a thermoplastic polymer, more preferably a polymer adapted to be injection molded, most preferably polyamide (PA), like aromatic, aliphatic or semi-aromatic polyamide, like PA6, PA11, PA12, PA6.6, PA6.10, PA6.12, PA10.10, PA10.12 or mixtures thereof. The polymer may as well be a composite of a polymer matrix and reinforcing elements. The polymer matrix may be any suitable polymer, preferably a thermoplastic polymer, more preferably a polymer adapted to be injection molded, most preferably polyamide (PA), like aromatic, aliphatic or semi-aromatic polyamide, like PA6, PA11, PA12, PA6.6, PA6.10, PA6.12, PA10.10, PA10.12 or mixtures thereof. The reinforcing elements may be reinforcing fibers or alike. Reinforcing fibers may be e.g. glass fibers, high tenacity polymeric fibers, and alike. These tracks, such as the gear racks, may comprise a metal bar, strip or profile, being coated, like being provided with a layer of polymeric material, via e.g. injection molding. A track with a metal core and a polymeric outer layer is hence used. The layer of polymeric material may be provided from any suitable polymer, preferably a thermoplastic polymer, more preferably a polymer adapted to be injection molded, most preferably polyamide (PA), like aromatic, aliphatic or semi-aromatic polyamide, like PA6, PA11, PA12, PA6.6, PA6.10, PA6.12, PA10.10, PA10.12 or mixtures thereof. The layer of polymeric material may as be provided from a composite of a polymer matrix and reinforcing elements. The polymer matrix may be any suitable polymer, preferably a thermoplastic polymer, more preferably a polymer adapted to be injection molded, most preferably polyamide (PA), like aromatic, aliphatic or semi-aromatic polyamide, like PA6, PA11, PA12, PA6.6, PA6.10, PA6.12, PA10.10, PA10.12 or mixtures thereof. The reinforcing elements may be reinforcing fibers or alike. Reinforcing fibers may be e.g. glass fibers, high tenacity polymeric fibers, and alike.

According to some embodiments, the side of the teeth oriented away from the web may be chamfered along the whole length of the gear rack. Alternatively, the side of the teeth oriented away from the web may be chamfered along one or more sections of the length of the gear rack. possibly, only the section or sections of the gear rack where the wheel of the shuttle is to engage and/or disengage from the gear rack are provided with chamfered teeth. As such, along the length of the gear rack, section with chamfered teeth and sections with non-chamfered teeth may alternate.

The chamfered teeth may be provided by chamfering the bar from which the gear rack is provided. Alternatively, chamfered teeth may be provided by coupling a side element to the side of the gear rack along he section where chamfered teeth are to be present, or along the whole length of the gear rack. The side element adds a chamfered profile to the teeth next to which it is coupled. The coupling may include gluing, welding and/or screwing and similar ways to couple the side element to the side of the gear rack.

According to a fourteenth, independent aspect of the invention, an automated warehouse comprises is provided, the warehouse comprising two or more storage structures structured along an aisle between said storage structures, said automated warehouses comprises an automated warehouse shuttle system comprising a track system comprising a non-horizontal track system comprising at least one pair of tracks, both tracks arranged in a non-horizontal plane along said aisle of the warehouse, one track of said pair of tracks is at a first side of the aisle in contact with the first of the at least two storage structures, the other track of said pair of tracks is at the second side of the aisle in contact with the second of the at least two storage structures, these tracks, e.g. the gear racks, comprises a polymeric track surfaces. These tracks, e.g. the gear racks, may be polymeric tracks, provided from said polymer, or tracks comprising a metal core and a polymeric outer layer. The track may as well be a composite track, comprising on of these polymers as a polymeric matrix and reinforcing elements like reinforcing fibers or alike, optionally being provided as a polymeric layer on a metal core. Reinforcing fibers may be e.g. glass fibers, high tenacity polymeric fibers, and alike. The track may comprise a metal core track, being coated with such polymeric coating, the coating being provided by injection molding over and around the metal core. The polymeric coating may provide the complete teeth of the track. When chamfered teeth are used, as according to the fourth aspect of the invention, the teeth with a chamfered flank, chamfered according to a plane having its normal non-parallel to the plane defined by the axis of rotation of the wheel and the middle point of the top land of the tooth, may be provided by injection molding said polymeric material on the metal core.

The use of such polymer track surfaces or even polymer tracks, may reduce the noise when shuttles, optionally also having polymeric climbing wheels to move along these tracks, have a polymeric surface or even are polymeric wheels. Hence an automated warehouse according to a fourteenth, independent aspect of the invention, may comprise one or more shuttles according to the eleventh aspect of the invention.

The other flank of the profile of the tracks may be a substantially flat surface.

As is clear for the skilled person, the features of one aspect of the invention may be combined with one or more features of one or more of the other aspects of the invention.

### Brief Description of the Drawings

Fig. 1A to 1C illustrates schematically a part of a storage structure of an automated warehouse in which a shuttle according to the invention may be used.
Fig. 2 illustrates schematically a side view of a shuttle according to the invention.
Fig. 3 and 4 illustrate schematically the rigid connection means being rotationally connected along a pivot axis to the frame of the shuttle of figure 2.
Fig. 5a and 5b illustrate schematically the working of this rigid connection means of the shuttle of figure 2.
Fig. 6a to 6c illustrate schematically the working of the one-way clutch bearing of the shuttle of figure 2.
Fig. 7 illustrates schematically details of the sprocket with the chamfered teeth of the shuttle of figure 2.
Fig. 8 illustrates schematically a chamfered gear wheel in combination with a toother bar having locally chamfered teeth.

In the different figures, the same reference refers to the same or a similar element.

### Detailed Description of Embodiment(s)

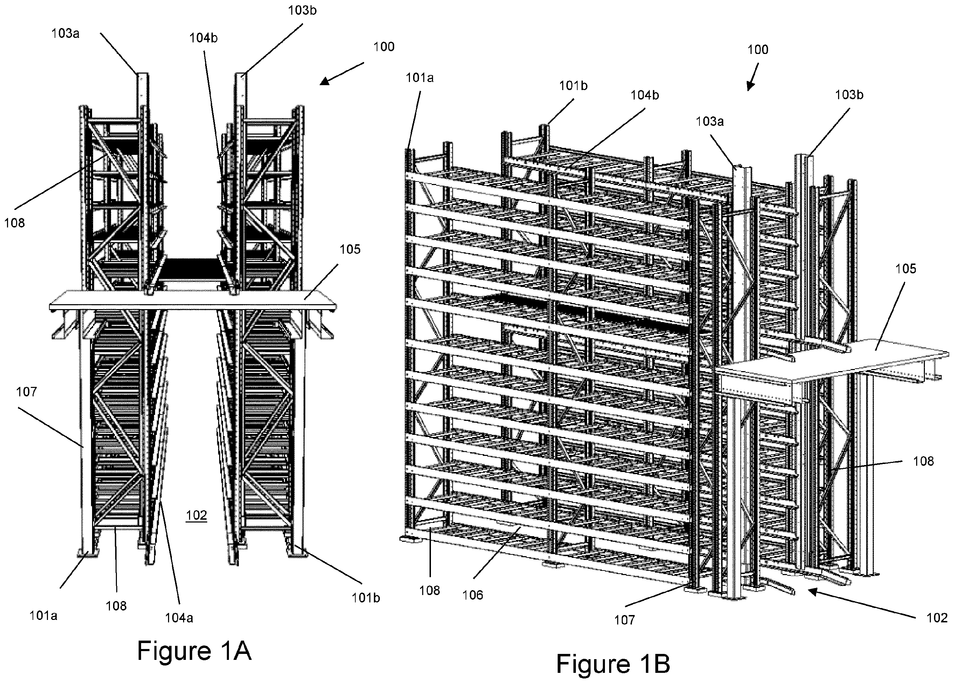

Figures 1A and 1B schematically show a front and perspective view of a racking structure 100 comprising two storage racks 101a and 101b structured along an aisle 102 between said storage racks. Obviously, the racking structure may comprise three or more storage bays, structured along one aisle between these storage racks. Each aisle 102 may comprise one pair of vertical tracks 103a and 103b, both tracks are arranged in a vertical plane along this aisle 102 of the warehouse 100. One track 103a is at a first side of the aisle 102 in contact with the first storage structure 101a. The other track 103b is at the second side of the aisle 102 in contact with the second storage structure 101b.

The track system may comprise a horizontal track system comprising a plurality of pairs of rails 104a and 104b, both arranged in a substantially horizontal plane along the aisle 10. The pairs of rails are at a different height in the aisle 102. Of each pair of rails, one rail 104a is at a first side of the aisle in contact with the first storage structures 101a, the other rail 104b is at the second side of the aisle in contact with the second storage structures 101b.

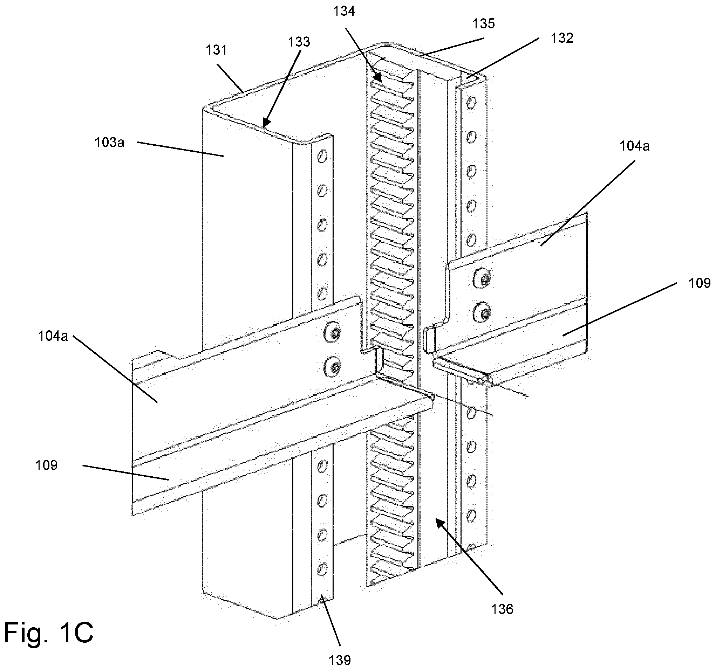

The warehouse comprises a mezzanine construction 105, being a horizontal plane or floor, extending outside one of the lane or aisle 102. The storage rack 101a and 101b comprise a plurality of horizontal elements such as horizontal beams 106 and vertical elements such as uprights 107, and horizontal bracing and diagonal bracings 108 to stiffen the structure. The vertical tracks 103a and 103b are provided parallel with and connected to the uprights 107. The rails 104a and 104b are provided parallel with and connected to the horizontal beams 106, and/or as visible in figure 1C, to the uprights 107.

All these uprights, beams and bracings are provided as metal profiled elements of rolled metal, preferably steel. The rails 104a and 104b in the storage structure are L-profiled metal, preferably steel profiles. The tracks 103a and 103b in the storage structure are C+ profiled elements, preferably metal, preferably steel rolled profiles.

The tracks 103a and 103b, as shown in figure 1C, have a web 131, delimited by two flanks 132 and 133. Flank 132 is provided with a toothed surface 134, adapted to engage with the pinion-, sprocket- or gear wheel or wheels. This flank 132 is covered with a toothed bar 135 along which the pinion-, sprocket- or gear wheels may climb or descend. The toothed bar has a vertical flat strip 136 adjacent the toothed surface 134. The toothed bar may be a metal bar like a steel bar, optionally being coated with a polymeric material, e.g. through injection molding the polymeric material on and around the metal core, thereby providing completely the teeth of the track. The polymeric material is preferably a polyamide matrix being reinforced with glass fibers. As a mere example, ZCR or ZCR-A racks of the company Elesa+Ganter (NL) are used.

The other flank 133 of the profile of the tracks 103a and 103b are substantially flat surfaces.

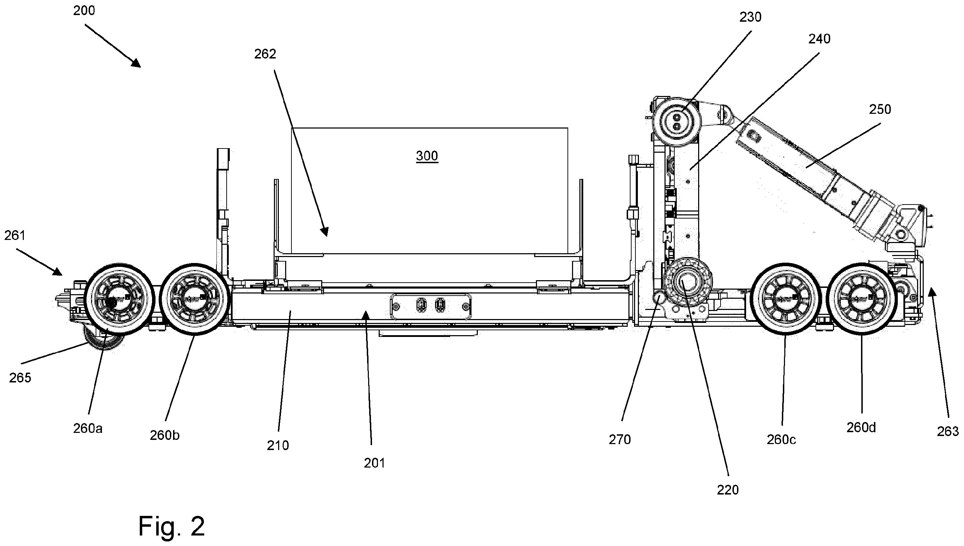

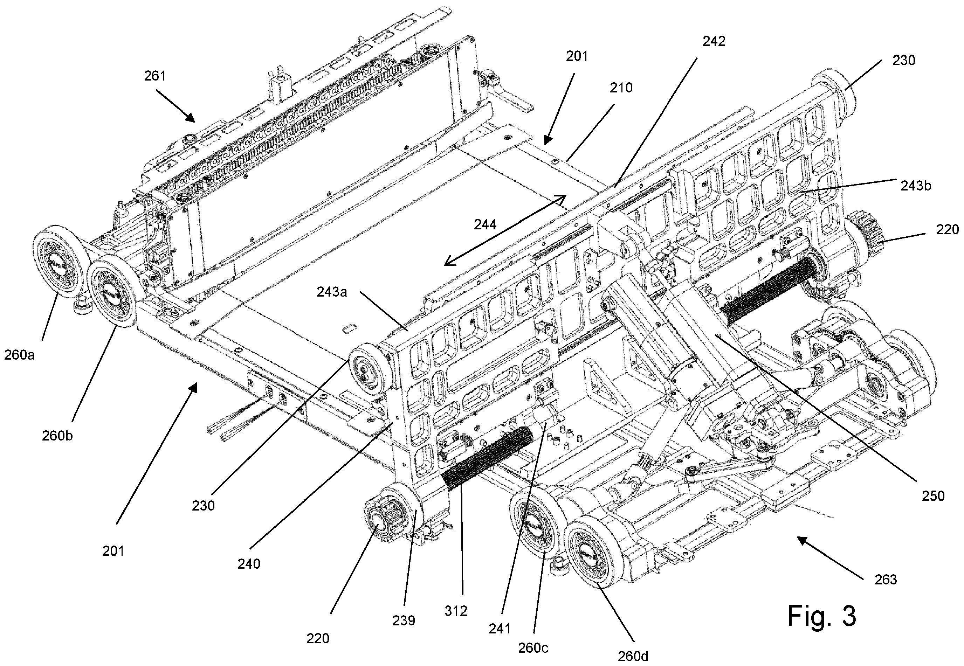

A shuttle 200 according to the invention is shown in figure 2. The various parts of the shuttle 200, and the functioning of them, are further disclosed in detail in figures 3 to 7.

The shuttle 200 which may transport in 3D goods, such as payload, in an automated warehouse is adapted for moving vertically in the automated warehouse 100 along vertical tracks 103a and 103b. the shuttle is also adapted for moving horizontally in the automated warehouse 100 along horizontal tracks 104a and 104b, and along horizontal surfaces.

The shuttle 200 comprises a frame 210 for carrying the payload 300. The shuttle has two lateral sides, one lateral side 201 is shown in figure 2. At each lateral side, the shuttle comprises one pair of wheels 220 and 230 adapted for moving the shuttle along the vertical tracks 103a or 103b. For each pair of wheels, one of these wheels is a gear wheel, i.e. wheel 220, having its axis of rotation substantially perpendicular to the lateral side 201 of the shuttle 200. The second wheel 230 is a pressure wheel having a substantially circular outer surface. The wheel 230 has a rotation axis parallel to the axis of wheel 220. The gear wheels 220 are spur gear wheels of module 4. The gear wheels 220 may be metal gear wheels like a steel wheels, optionally being coated with a polymeric coating.

The two wheels 220 and 230 are mutually connected by means of a rigid connection means 240 which is rotationally connected along a pivot axis to the frame. The frame 210 and the rigid connection means 240 are hinged one to the other by means of a plurality, such as here two, coaxially mounted hinges 241. The pivot axis is hence coinciding with the axes of the hinges 241.

In this embodiment, the shuttle 200 comprises one actuator 250 to control and set the rotational position of the frame 210 and connecting means 240. The actuator here may be a linear actuator. The torque and position of the actuator may be measured and the actuator may exercise a force such that a required torque value is reached.

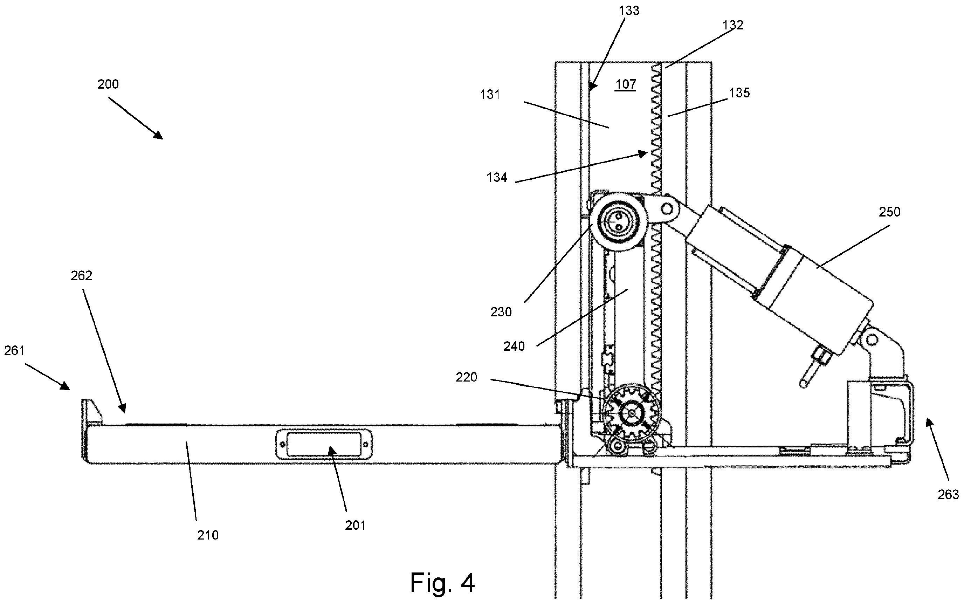

The rigid connection means 240 a plate structure, comprising at least three mutually parallel planes 242, 243a and 243b, the middle plane 242 is connected to the actuator 250, while at both sides of the middle plane 242, one of the two other planes 243a and 243b are slidingly engaged with the middle plane 242. The two slidingly engaging planes each carry and provide a pair of wheels 220 and 230 at one of the lateral sides of the shuttle 220. The sliding engagement allows the pair of wheels 220 and 230 carried by this plate, to move in the direction 244 of the sliding engagement. This sliding engagement is parallel to the axes of rotation of the pair of wheels 220 and 230. As such the pair of wheels may move linearly in line with their axes of rotation. Hence the two slidingly engaging planes may be moved from a retracted to an extended position and vice versa . As the wheels are coupled to these planes, the wheels may be moved from a retracted to an extended position, and back, as well. As such, the gear wheels 220 may be brought into the opening of the vertical track 103a or 103b, and may bring the gear wheel 220 to a position from which it may engage the toothed bar 135. The reverse movement may be executed as well. On the other side of the vertical track 103a or 103b, the pressure wheel 230 may be in a position from where it can be brought in contact with the other flank 133 of the vertical track 103a or 103b. This is shown in figure 4.

In this embodiment, the shuttle 200 further comprises at each lateral side of the shuttle, two pairs of wheels 260a, 260b, 260c and 260d, adapted to drive and move the shuttle along the horizontal rails. One pair of these wheels, being wheels 260a and 260b, are provided at the traverse side 261 of the shuttle at which side the payload is or may be carried on a platform 262. The other pair of these wheels, being wheels 260c and 260d, are provided at the transverse side 263 of the shuttle at which side the actuator 250 is bridging the edge of the frame 210 and the top of the rigid connecting means 240. These pairs of wheels are adapted to contact the upper side 109 of the L-profiled rails 104a and 104b. As the L-profiled rails 104a and 104b are interrupted at each position of an vertical track 103a or 103b to allow the drive axles driving the gear wheels 230 in the profile of the vertical track 103a or 103b, when these gear wheels cause the shuttle to move upwards, the provision of pairs of wheels 260a and 260b, and 260c and 260d provide the advantage that shocks are limited when the shuttle passes horizontally such an opening in the rails 104a and 104b. This is particularly true when the axial distance between the two wheels of each pair of wheels is more than the width of the opening between the adjacent rails.

The wheels 260a, 260b, 260c and 260d may be driven, though preferably only one of the wheels at each lateral side is driven. The shuttle 200 in this embodiment is provided with a swivel wheel 265, being provided at the transverse side 261 of the shuttle at which side the payload is or may be carried. Preferably only the wheels 260c and 260d are driven. The swivel wheel is positioned lower than the wheels 260a to 260d, so wheels 260a to 260c are not in contact with the driving planes.

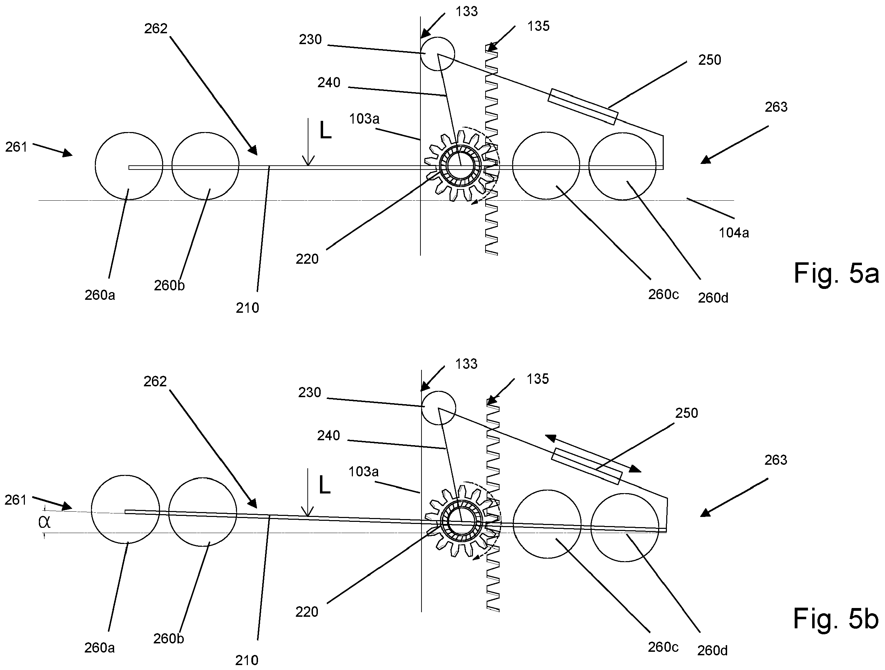

As shown in figure 4, the by linear sliding, the gear wheels 220 is brought into the opening of the vertical track 103a or 103b, and the pressure wheel 230 is in a position from where it can be brought in contact with the other flank 133 of the vertical track 103a or 103b. The presence of an actuator 250 connected to the rigid connection means 240, e.g. the upper side of the rigid connection means 240 and the frame 210, such as at the outer end 263 of the frame, may set the inclination angle α of the platform 262 for carrying the payload, both when carrying a payload or not. In figure 5a, the shuttle 200 is carried by the wheels 260a, 260b, 260c and 260d on a rail 104a. the gear wheel 220 is in contact with the toothed bar 135 and the pressure wheel 230 is pressing against the flank 132. The actuator 250 is forcing the frame 210 and the rigid connection means 240 such a set torque value is reached. When in figure 5a the gear wheel starts to rotate in order to move the shuttle upwards, i.e. the gear wheel 220 rotates clockwise, the shuttle is lifted and wheels 260a to 260d come loose from the rail 104a. Around the axis of rotation of the gear wheel 220, the frames left and right side, both carrying a load, will tend to bend downward. At the side of the payload, a counterclockwise moment is caused by the payload as well as the weight of the shuttle at this side of the axis of rotation. At the other side, the weight of the shuttle at this side of the axis of rotation will cause a clockwise moment. Because of the bending stiffness of the frame and the fact that usually the counterclockwise moment will be larger, the frame may tend to bend downwards at the side of the axis where the payload is carried. This downward bending should be avoided, since this may e.g. cause the payload to move on the platform. As shown in figure 5b, the actuator may enlarge the distance between the two points where the actuator is coupled to either the frame or the connection means. Because the rigid connection means is blocked in the vertical track 103a or 103b, the frame will be rotated clockwise and the left side of the shuttle, where the load is carried, is lifted. As such the bending may be compensated. Optionally an inclinometer may be installed to keep the horizontal orientation of the platform 262. Alternatively, the platform 262 may be brought to a set inclination measured by e.g. this inclinometer.

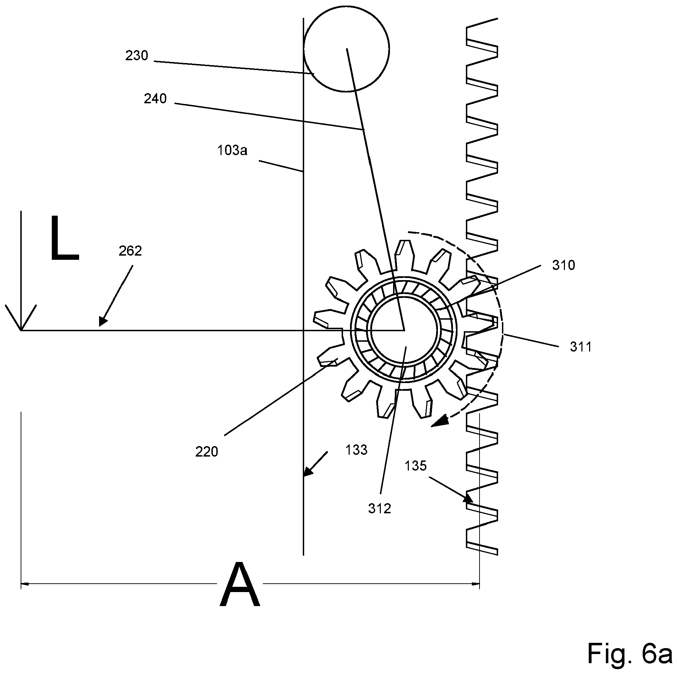

As shown in figures 6a to 6c, for each gear wheel 220, a one-way clutch bearing 310 is provided between the gear wheel and the axis or axle 312 of rotation. The free direction of rotation 311 may be the direction which is the direction of upwards moving if the wheel were in contact with the toothed bar 135. The load L of the shuttle 200, which may include the payload carried, acting on the teeth of the gear wheel 220 over a length A, applies a moment M to the gear wheel. Hence as an example shown in figure 6a, when the shuttle is hanging stand still in the vertical track 103a or 103b, the gear wheel 220 will not be driven. The load L will tend to pull the shuttle downwards, hence tend to rotate the gear wheel 220 counterclockwise. This counterclockwise is prevented by the one-way clutch bearing 310, hence the shuttle will keep its horizontal orientation and horizontal position in the vertical track 103a or 103b.

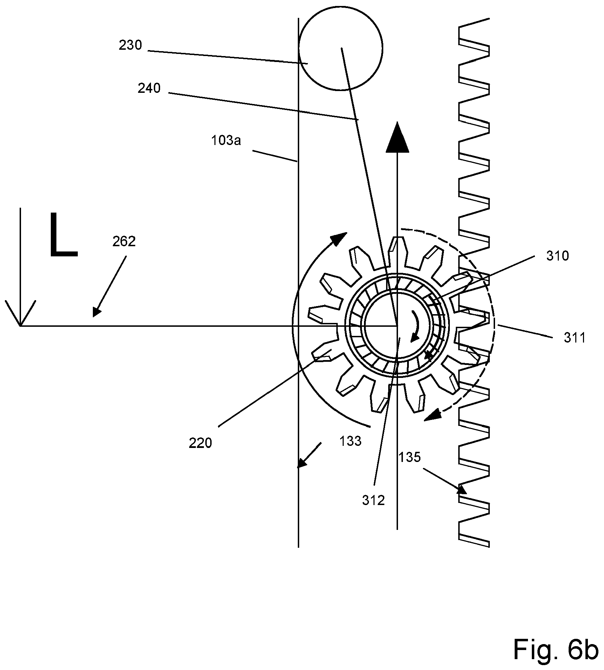

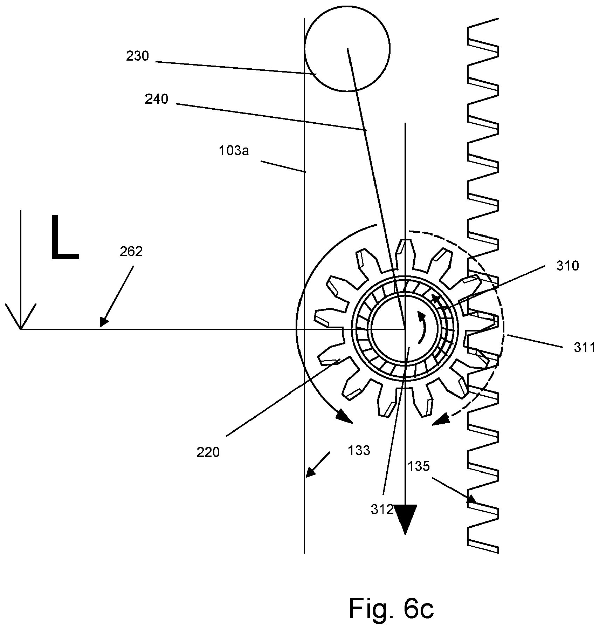

As shown in figure 6b, then the axle 312 of the gear wheel 220 is now driven clockwise, to move the shuttle upwards, the very same moment tends to counter this rotation. However again the load L will tend to pull the shuttle downwards, hence tend to rotate the gear wheel 220 counterclockwise. This counterclockwise is prevented by the one-way clutch bearing 310, and the one way clutch bearing will rotate along with the axle 312. The shuttle will keep its horizontal orientation and will move vertically upwards in the vertical track 103a or 103b. As shown in figure 6c, then the axle 312 of the gear wheel 220 is now driven counterclockwise, to move the shuttle downwards, the very same moment tends to speed up this rotation. However again the load L will tend to pull the shuttle downwards, hence tend to rotate the gear wheel 220 counterclockwise faster. This increase of rotation speed counterclockwise is prevented by the one-way clutch bearing 310, and the one way clutch bearing will rotate along with the axle 312. The shuttle will keep its horizontal orientation and will move vertically downwards in the vertical track 103a or 103b.

When the shuttle 200 for whatever reason gets stuck in the vertical track 103a or 103b in vertical direction. The situation as shown in figure 6a applies. The shuttle will not move downwards thanks to the provision of the one way clutch bearing. To remove the shuttle from the upright, the shuttle may be pulled upwards in the vertical track 103a or 103b by an externa device, like a crane or alike. When pulling the shuttle upwards, the one way bearing allows the gear wheels 230 to rotate clockwise, hence the shuttle van be pulled upwards while the gear wheels 230 facilitate the movement in this direction.

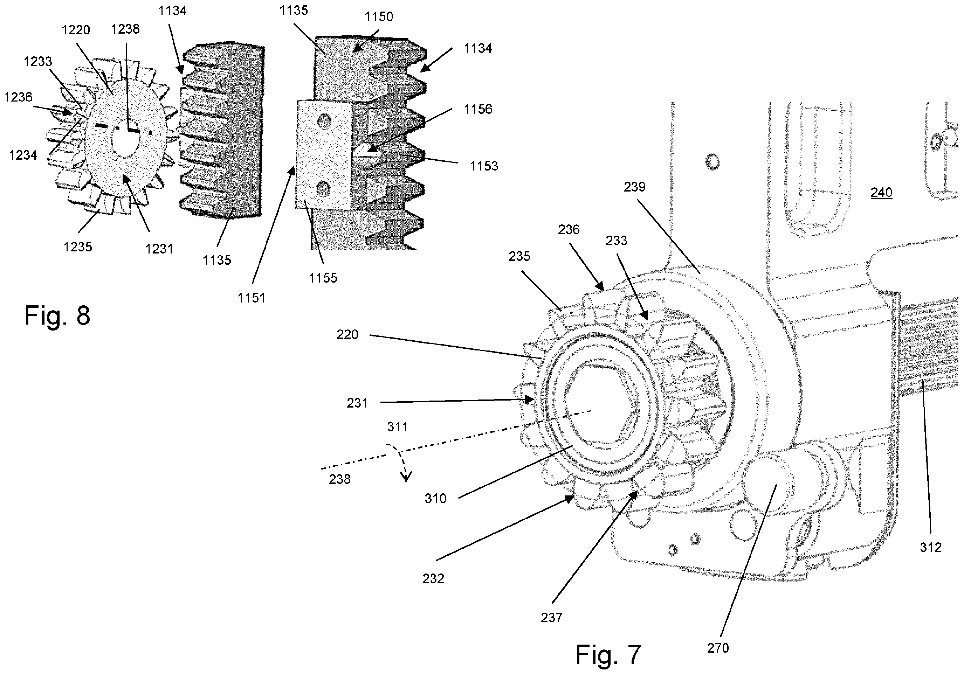

Turning to the gear wheels 230 itself, as best visible in figure 7, at the radial face side 231 of the gear wheel 220, which side 231 is oriented outwards from the shuttle 200, at least part of the edge 232 between the radial face side of each tooth 235 and one flank 233 of the teeth 235 is chamfered according to a plane having its normal non-parallel to the plane 237 defined by the axis of rotation 238 of the wheel 220 and the middle point 236 of the top land of the tooth 235. When the gear wheel 220, moving from its retracted to its extended position, is to mate with teeth of the toothed surface 134, which teeth are fixed in position on the toothed bar 135, the flank 233 of the teeth 235 may be brought in contact with the opposite flank of a tooth of the toothed bar 135. Due to the chamfered teeth of the gear wheel 220, the gear wheel will be forced to rotate in a direction opposite to the outer surface of plane forming the chamfered side of the teeth. In particularly when the gear wheel 220 is provided with a one way clutch bearing having its direction 311 of free running in this direction, the gear wheel 220 will easily engage with the toothed bar 135. Hence the shuttle 200 is provided with a teeth mesh system comprising pinion-, sprocket- or gear wheels having at the radial face side of the wheel which is oriented outwards from the shuttle, at least part of the edge 232 between the radial face side of each tooth 235 and at least one flank 233 of the teeth being chamfered according to a plane having its normal non-parallel to the plane defined by the axis of rotation of the wheel and the middle point of the top land of the tooth, and comprising a one-way clutch bearing 310 being provided between the pinion-, sprocket- or gear wheel and the axis of rotation.

As is also shown in figure 7, the gear wheel 220 is provided with a flat surface 239 adjacent the teeth 235 and positioned closer to the shuttle. This flat surface 239 is to contact the flat strip 136 of the toothed bar 135. When the gear wheel is pressed in the teeth of the toothed bar, this flat surface and flat strip will prevent the teeth to engage too deep, thereby safeguarding the teeth from too quick damage.

As is also shown in figure 7, the gear wheel 220 is provided with an adjacent locking pin 270. The locking pin is spring loaded and in figure 7 shown in extended position. When the gear wheel is extended into the opening of vertical track 103a or 103b, the locking pin 270 will be pushed against the inwards oriented flank 139 of the profile of the vertical tracks opposite the flank 132. As the locking pin 270 is spring loaded, and a detector is monitoring its compression and decompression, or its position compressed and extended, the detector will monitor a compression of the locking pin during engagement. Once the gear wheel 220 and pressure wheel 230 are deep enough in the opening of the profile 107, the rigid contacting means will be inclined by the linear actuator to engage the teeth of the gear wheel 220 and the toothed bar 135. Seen the position of the locking pin 270, this inclination action will cause the locking pin to slide from the flank 139 into the opening of the vertical track 103a or 103b. The locking pin will return in extended position, which will be detected by the detector. The sequence of the signals from the detector may inform the control unit of the shuttle of a complete and successful engagement of the gear wheel 220 in the toothed bar 135.

As shown in figure 8, an alternative gear wheel 1220 in combination with a toothed bar 1135, being a gear rack, having a toothed surface 1134. Chamfered teeth are be provided along a the side 1150 of the teeth oriented away from the web of the profile the toothed bar is mounted on, hence the side oriented towards the toothed wheels to be received by the toothed bar. The teeth are chamfered along a section 1151 of the length of the toothed bar 1135, being a gear rack. This section 1151 is a section of the toothed bar 1135, being a gear rack, where the wheel of the shuttle is to engage and/or disengage from the toothed bar 1135. Alternatively the outer surface of the section may be provided by half a truncated cone, sections by a plane being coplanar with the axis of the truncated cone.

The tooth 1153, or teeth to be chamfered, are extended by coupling a side element 1155 to the side 1150 of the toothed bar 1135 along the section where chamfered teeth are to be present. This side element 1155 adds a chamfered profile 1156 to the tooth 1153 or teeth next to which it is coupled. In the embedment show in figure 8, the coupling is provided by screwing the side element 1155 to the side 1150 of the toothed bar 1135.

As for the alternative gear wheel 1220, at the radial face side 1231 of the gear wheel 1220, which side 1231 is oriented outwards from the shuttle and towards the toothed bar 1135 it is to engage and disengage with, the teeth has two chamfered flanks 1233 and 1234, each chamfered flank chamfered according to a plane having its normal non-parallel to the plane defined by the axis of rotation 1238 of the wheel 1220 and the middle point 1236 of the top land of the tooth 1235. The axis of rotation 1238 is parallel to the direction of engagement and disengagement of the wheel 1220 and toother bar 1135.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A shuttle for three-dimensionally transporting goods in an automated warehouse, said shuttle being adapted for moving at least non-horizontally in an automated warehouse along a non-horizontal track, the shuttle comprising a frame for carrying the payload, the shuttle having two lateral sides, at each lateral side of the shuttle comprises at least one pair of wheels, said pairs of wheels being adapted for moving said shuttle at least non-horizontally in an automated warehouse along a non-horizontally track, the two wheels of each pair of wheels being mutually connected by means of a rigid connection means, the rigid connection means being rotationally connected along a pivot axis to the frame, the shuttle comprises at least one actuator to control and set the rotational position of the frame and connecting means, for each pair of wheels, at least one of said wheels is a pinion-, sprocket- or gear wheel having its axis of rotation non-parallel to the lateral side of the shuttle, said at least one of said wheels being a pinion-, sprocket- or gear wheel is provided with a teeth mesh system enabling said at least one of said wheels being a pinion-, sprocket- or gear wheel to rotate in only one direction when a force in axial direction is applied to the teeth of said wheel.

2. A shuttle according to claim 1, wherein said teeth mesh system comprises for the at least one of said wheels being a pinion-, sprocket- or gear wheel having at the radial face side of the wheel, which is oriented outwards from the shuttle,
• at least part of the edge between the radial face side of each tooth and at least one flank of the teeth is chamfered according to a plane having its normal non-parallel to the plane defined by the axis of rotation of the wheel and the middle point of the top land of the tooth, and
• a one-way clutch bearing is provided between the pinion-, sprocket- or gear wheel and the axis of rotation.

3. A shuttle according to claim 1 or 2, wherein the two wheels of each pair of wheels are positioned on the connection means at mutually different heights, said pivot axis being positioned at a height between the pair of wheels.

4. A shuttle according to any one of the claims 1 to 3, wherein for one or for both pairs of wheels, the wheels of the pair of wheels have axes of rotation parallel to the pivot axis.

5. A shuttle according to any one of the claims 1 to 4, wherein each of the pairs of wheels comprise a climbing wheel and a pressure wheel.

6. A shuttle according to any one of the claims 1 to 5, wherein for one or both the pairs of wheels, the rigid connection means is extendible and retractable in a direction parallel to the pivot axis.

7. A shuttle according to any one of the claims 1 to 6, wherein one or both the pairs of wheels, the rigid connection means is a plate.

8. A shuttle according to any one of the claims 1 to 7, wherein one rigid connection means is provided to connect the pairs of wheels on both lateral sides of the shuttle.

9. A shuttle according to any one of the claims 1 to 8, wherein the at least one actuator is a linear actuator.

10. A shuttle according to any one of the claims 1 to 9, wherein the at least one actuator is controlled by torque and/or position

11. A shuttle according to any one of claims 1 to 10, wherein the angle between the plane perpendicular to the axis of rotation of the wheel, and the chamfered flank, is in the range of 25° to 35°

12. A shuttle according to any one of the claims 1 to 11, wherein the free rotating direction of the one way bearings is upwards and directed away from the position for carrying the payload on the frame.

13. A shuttle according to any one of the claims 1 to 12, wherein said shuttle comprises one pinion-, sprocket- or gear wheels at each longitudinal side of the shuttle, these pinion-, sprocket- or gear wheels being positioned near one of the traverse sides of the shuttle, the shuttle comprising at each lateral side one driven horizontal driving wheel near the other of the traverse sides of the shuttle, and one or more non driven, free rotating horizontal driving wheels at each lateral side, all of said pinion-, sprocket- or gear wheels and said horizontal driving wheel being linearly movably mounted on their axes of rotation between a first and a second position, the first position is the position in which the wheel is farthest remote from the lateral side of the shuttle, the second position, the position in which the wheel is closest to the lateral side of the shuttle.

14. An automated warehouse, said automated warehouse comprises two or more storage racks structured along an aisle between said storage racks, said automated warehouses comprises an automated warehouse shuttle system comprising a track system comprising a non-horizontal track system comprising at least one pair of tracks, both tracks arranged in a non-horizontal plane along said aisle of the warehouse, one track of said pair of tracks is at a first side of the aisle in contact with the first of the at least two storage racks, the other track of said pair of tracks is at the second side of the aisle in contact with the second of the at least two storage racks, said automated warehouse shuttle system comprises at least one shuttle according to one of the preceding claims, said shuttle being adapted for moving at least non-horizontally along said pair of non-horizontal tracks.

15. An automated warehouse according to claim 14, wherein said track system comprises a horizontal track system comprising at least two pairs of rails, both arranged in a substantially horizontal plane along said at least one of said aisles of the warehouse, said at least two pairs of rails being at a different height in said aisle, of each pair of rails, one rail is at a first side of the aisle in contact with the first of the at least two storage racks, the other rail of said pair of rails is at the second side of the lane in contact with the second of the at least two storage racks, said shuttle being adapted for moving at least horizontally along said pair of rails.
